# EUROPÄISCHE PATENTANMELDUNG

(11) **EP 4 462 391 A1**
(43) Veröffentlichungstag der Anmeldung: **13.11.2024**
(21) Anmeldenummer: 24173884.8
(22) Anmeldetag: 02.05.2024
(51) Int. Cl.: G07B 15/06, H04W 4/029, H04W 4/40

(54) **VERFAHREN, ENDGERÄT UND SYSTEM ZUR ÜBERWACHUNG EINER MAUTERHEBUNGSANWENDUNG**

(30) Priorität: 09.05.2023 EP 23172291
(71) Anmelder: Toll Collect GmbH, 10785 Berlin (DE)
(72) Erfinder: Heyd, Matthias, 10409 Berlin (DE); Betz, Benedikt, 10559 Berlin (DE); Ledermann, Oliver, 10247 Berlin (DE)

(57) **Zusammenfassung**

Es ist ein computerimplementiertes Verfahren zur Überwachung einer von einem tragbaren Endgerät ausgeführten Mauterhebungsanwendung offenbart. Das Verfahren umfasst folgende Schritte: Erfassen eines Bewegungszustands des tragbaren Endgeräts; Vergleichen des erfassten Bewegungszustands mit einem Bewegungszustand, der gemäß einem Mauterhebungszustand zu erwarten ist; und Ausgeben eines Signals mittels des tragbaren Endgeräts, wenn der erfasste Bewegungszustand nicht mit dem erwarteten Bewegungszustand übereinstimmt. Der Mauterhebungszustand nimmt einen von zwei möglichen Zuständen ein, nämlich aktiv oder inaktiv, wobei bei aktivem Mauterhebungszustand der erwartete Bewegungszustand fahrend ist, und wobei bei inaktivem Mauterhebungszustand der erwartete Bewegungszustand nichtfahrend ist. Des Weiteren sind ein tragbares Endgerät und ein System offenbart.

## Beschreibung

Die Offenbarung betrifft ein Verfahren, ein tragbares Endgerät und ein System zur Überwachung einer Mauterhebungsanwendung.

### Hintergrund

Es gibt verschiedene Technologien zur Erhebung von Maut bei Benutzung einer mautpflichtigen Strecke und zur Kontrolle eines mautpflichtkonformen Betriebs.

Ein Verfahren zur Erhebung von Maut basiert auf einem satellitengestützten System. Hierbei ist ein mautpflichtiges Straßennetz in mehrere Abschnitte unterteilt, wobei jedem Abschnitt ein Tarif zugeordnet ist, der die Höhe der Maut bestimmt. Die Abbildung des mautpflichtigen Straßennetzes auf die Abschnitte bildet einen Teil der Betriebsdaten des Mautsystems und ist in einer Zentrale gespeichert. Mit einem in einem Fahrzeug angeordneten Fahrzeuggerät (sogenannte OBU (OBU - on-board unit)) wird mithilfe eines globalen Navigationssatellitensystems während der Fahrt die Position des Fahrzeugs in regelmäßigen Zeitabständen bestimmt. Die bestimmten Positionen werden in einer sogenannten Fahrspurdatei aufgezeichnet, welche in bestimmten Zeitabständen an die Zentrale übersandt wird. In der Zentrale erfolgt die Auswertung der Fahrspurdatei, nämlich der Abgleich der ermittelten Positionen mit den mautpflichtigen Abschnitten und die Berechnung der zu zahlenden Maut.

Das Dokument DE 101 04 502 A1 beschreibt ein Verfahren zur automatischen Kontrolle in einem solchen Mautsystem, wobei straßenseitige Kontrolleinrichtungen, die mit Fahrzeuggeräten, die von den die straßenseitigen Kontrolleinrichtungen passierenden Fahrzeugen mitgeführt werden, drahtlos kommunizieren (z. B. via DSRC (DSRC - Dedicated Short Range Communication)), um Mautinformationen von diesen anzufordern und zu prüfen. Nachteilig bei diesem Verfahren ist, dass jedes mautpflichtige Fahrzeug spezielle Hardware, nämlich das DSRC-Modul mitführen muss, um die Kommunikation mit der Kontrollstelle zu ermöglichen.

In der Regel haben vom Fahrer mitgeführte Geräte (z. B. Smartphone oder Tablet) oder eine im Fahrzeug vorhandene Telematik-Plattform die für eine automatische Mauterhebung notwendigen Funktionen wie Positionsbestimmung (z. B. via GPS (GPS - global positioning system)), Kommunikation mittels Mobilfunk und eine (grafische) Benutzeroberfläche.

Das Dokument DE 20 2021 106 013 U1 offenbart ein System und ein Verfahren zur Mauterhebung für ein Kraftfahrzeug. Das System weist ein tragbares Mautgerät, welches dem Kraftfahrzeug zugeordnet ist, und eine zentrale Datenverarbeitungseinrichtung auf. Zwischen dem tragbaren Mautgerät und der zentralen Datenverarbeitungseinrichtung besteht zumindest zeitweise eine Kommunikationsverbindung. Das tragbare Mautgerät ist eingerichtet, während einer Fahrt des Kraftfahrzeugs in ersten regelmäßigen Zeitabständen eine Positionsinformation zu bestimmen, wobei die Positionsinformation eine Position des Mautgeräts umfasst; die bestimmten Positionsinformationen in einem Speicher abzulegen; und die gespeicherten Positionsinformationen bei Eintreten einer vorbestimmten Bedingung an die zentrale Datenverarbeitungsrichtung zu übermitteln. Ein Nutzer muss hierbei den Start und das Ende einer mautpflichtigen Fahrt manuell eingeben. Problematisch wird es, wenn der Nutzer diese Eingabe vergisst. Wenn ein Nutzer ein tragbares Mautgerät verwendet, um die gefahrene Strecke für die Mauterhebung zu erfassen, kann es vorkommen, dass er das Gerät nach abgeschlossener Fahrt aus dem Fahrzeug entfernt, es allerdings vergisst, die Mauterhebung zu beenden. Ebenso kann es vorkommen, dass der Nutzer vor dem Starten einer Fahrt vergisst, die Mauterhebung mit dem tragbaren Mautgerät zu starten. Dies führt zu einer inkorrekten Mauterhebung und unter Umständen zu einer ungewollten Mautprellung.

Das Dokument EP 2 426 511 A1 offenbart ein Endgerät zum Bestimmen einer Position. Es wird eine Position und eine Bewegung des Endgeräts bestimmt. Die Position und die Bewegung werden mit einer Karte abgeglichen, um zu ermitteln, ob sich ein Nutzer des Endgeräts in einem elektrischen Zug befindet. Hiermit können ein Einsteigen des Nutzers in den elektrischen Zug und ein Aussteigen des Nutzers aus dem elektrischen Zug bestimmt werden.

Das Dokument WO 2010/023165 A1 offenbart ein Verfahren und eine Vorrichtung zur Ermittlung eines Bewegungszustands eines Fahrzeugs mit einem Beschleunigungssensor. Abhängig von einem Messsignal des Beschleunigungssensors wird ein Vibrationssignal ermittelt, das repräsentativ ist für Vibrationen des Fahrzeugs. Abhängig von einem Vergleich des Vibrationssignals mit zumindest einem vorgegebenen Schwellenwert wird ermittelt, ob das Fahrzeug steht oder ob das Fahrzeug fährt.

Das Dokument US 2005/0149384 A1 offenbart ein System und ein Verfahren zur Durchführung von Fahrzeugbezahl-Transaktionen. Das System umfasst ein Fahrzeug mit einer Positionsbestimmungskomponente und einer Kommunikationskomponente sowie einen Server mit einer Kommunikationskomponente, einer Positionsvergleichskomponente und einer Transaktionskomponente. Die Positionsbestimmungskomponente bestimmt die Position des Fahrzeugs und die Kommunikationskomponente des Fahrzeugs sendet die ermittelte Fahrzeugposition an den Server. Der Server bestimmt, ob die Fahrzeugposition sich an einem Ort befindet, für den eine Bezahlung erforderlich ist. Falls ja, wird mittels der Transaktionskomponente eine Zahlung durchgeführt.

Das Dokument US 2019/0318398 A1 offenbart ein Verfahren und ein System zum Bestimmen einer entfernungsabhängigen Gebühr für ein Fahrzeug. Ein mobiles Endgerät wird mittels eines kurzreichweitigen Netzwerks (PAN - personal area network) mit einem Fahrzeug gekoppelt. Mit dem mobilen Endgerät wird eine Entfernungsinformation bestimmt und an einen Server übertragen. Die Entfernungsinformation kann auf verschiedene Arten bestimmt werden. Wenn das Fahrzeug in Bewegung ist, wird mit dem Endgerät mittels GPS die zurückgelegte Entfernung bestimmt. Wenn eine bestimmte Zeit abgelaufen ist, wird die bestimmte Entfernung an den Server übermittelt. In einer Ausführungsform wird der Fahrer zu Beginn der Fahrt und während der Fahrt zu bestimmten Zeiten aufgefordert, mit dem Endgerät ein Foto des Kilometerzählers des Fahrzeugs aufzunehmen. Die Fotos werden an den Server übermittelt und dort mittels Texterkennung ausgewertet, um die zurückgelegte Entfernung zu bestimmen. Die Aufforderung kann von dem Server gestellt werden oder nach einem Zeitplan erfolgen. Die Aufforderung an den Fahrer kann beinhalten, das Foto aufzunehmen während das Fahrzeug stillsteht.

Das Dokument EP 3 002 733 A1 offenbart ein routenflexibles Mautverfahren. Mit einem Endgerät wird eine Mauterhebungsinitiierungsnachricht an eine Zentrale übermittelt, um eine Mauterhebung zu starten. Während der Fahrt werden Positionen des Fahrzeugs mit dem Endgerät bestimmt. Das Endgerät sendet eine Startposition zu Beginn der Fahrt und Via-Positionen während der Fahrt an die Zentrale. Die Zentrale wertet die Via-Positionen aus. Wenn die zuletzt übersandte Via-Position sich nicht in einer mautpflichtigen Verkehrsfläche befindet, wird eine Aufforderung an das Endgerät übermittelt, die Mauterhebung zu beenden. Wenn sich die Via-Position in einer mautpflichtigen Verkehrsfläche befindet, wird die Mauterhebung fortgesetzt.

### Zusammenfassung

Aufgabe ist es, verbesserte Technologien für eine Mauterhebung bereitzustellen. Insbesondere sollen mögliche Benutzerfehler bei der Verwendung eines tragbaren Endgeräts zur Mauterhebung reduziert werden.

Es sind ein Verfahren nach Anspruch 1, ein tragbares Endgerät nach Anspruch 13 und ein System nach Anspruch 14 offenbart. Weitere Ausführungsformen sind Gegenstand von abhängigen Ansprüchen.

Nach einem ersten Aspekt ist ein computerimplementiertes Verfahren zur Überwachung einer von einem tragbaren Endgerät ausgeführten Mauterhebungsanwendung offenbart. Das Verfahren umfasst folgende Schritte:
- Erfassen eines Bewegungszustands des tragbaren Endgeräts,
- Vergleichen des erfassten Bewegungszustands mit einem Bewegungszustand, der gemäß einem Mauterhebungszustand zu erwarten ist, und
- Ausgeben eines Signals mittels des tragbaren Endgeräts, wenn der erfasste Bewegungszustand nicht mit dem erwarteten Bewegungszustand übereinstimmt.

Nach einem zweiten Aspekt ist ein tragbares Endgerät bereitgestellt, das eingerichtet ist,
- einen Bewegungszustand des tragbaren Endgeräts zu erfassen,
- den erfassten Bewegungszustand mit einem Bewegungszustand, der gemäß einem Mauterhebungszustand zu erwarten ist, zu vergleichen und
- ein Signal auszugeben, wenn der erfasste Bewegungszustand nicht mit dem erwarteten Bewegungszustand übereinstimmt.

Nach einem dritten Aspekt ist ein System offenbart, wobei das System ein tragbares Endgerät und eine zentrale Datenverarbeitungseinrichtung aufweist. Das tragbare Endgerät ist eingerichtet:
- einen Bewegungszustand des tragbaren Endgeräts zu erfassen,
- den erfassten Bewegungszustand mit einem Bewegungszustand, der gemäß einem Mauterhebungszustand zu erwarten ist, zu vergleichen und
- ein Signal auszugeben, wenn der erfasste Bewegungszustand nicht mit dem erwarteten Bewegungszustand übereinstimmt.

Zwischen der zentralen Datenverarbeitungseinrichtung und dem tragbaren Endgerät besteht zumindest zeitweise eine Kommunikationsverbindung.

Der erwartete Bewegungszustand wird durch den Mauterhebungszustand bestimmt. Der Mauterhebungszustand kann einen von zwei möglichen Zuständen einnehmen, nämlich aktiv oder inaktiv. Bei aktivem Mauterhebungszustand ist der erwartete Bewegungszustand fahrend. Bei inaktivem Mauterhebungszustand ist der erwartete Bewegungszustand nicht-fahrend.

Das tragbare Endgerät kann auch als mobiles Endgerät bezeichnet werden. Das tragbare Endgerät kann einen Prozessor, einen Speicher und eine Kommunikationseinheit aufweisen. Des Weiteren kann das tragbare Endgerät eine Ausgabeeinheit aufweisen. Die Ausgabeeinheit kann als Anzeigeeinrichtung, als Lautsprecher, als Vibrationseinheit oder als eine beliebige Kombination der vorgenannten Elemente ausgebildet sein. Die Anzeigeeinrichtung kann als berührungsempfindlicher Bildschirm (Touchscreen) ausgebildet sein. Das tragbare Endgerät kann beispielsweise als Smartphone oder als Tablet ausgebildet sein. Das tragbare Endgerät kann einem Kraftfahrzeug zugeordnet sein, für das die Mautgebühr bestimmt werden soll. Das tragbare Endgerät kann in dem Kraftfahrzeug angeordnet sein oder an dem Kraftfahrzeug angeordnet sein. Das tragbare Endgerät kann zumindest zeitweise lösbar in einem Kraftfahrzeug angeordnet sein, beispielsweise in einer Halterung.

Das Signal kann als ein optisches Signal, als ein akustisches Signal, als ein haptisches Signal oder als eine beliebige Kombination der vorgenannten Signale ausgegeben werden.

Die zentrale Datenverarbeitungseinrichtung wird in der vorliegenden Offenbarung auch kurz als Zentrale bezeichnet. Die Zentrale kann einen Prozessor, einen Speicher und eine Kommunikationseinheit aufweisen. Die Zentrale kann als Server ausgebildet sein.

Das tragbare Endgerät und die Zentrale sind eingerichtet, eine Kommunikationsverbindung zum zumindest zeitweisen, bidirektionalen Austausch von Signalen und/oder Daten aufzubauen. Die Kommunikationsverbindung kann drahtlos ausgeführt sein, beispielsweise mittels Mobilfunk oder mittels WLAN (WLAN - wireless local area network, drahtloses lokales Netzwerk).

Der Bewegungszustand kann als fahrend oder als nicht-fahrend ermittelt werden. Der Bewegungszustand fahrend bedeutet, dass das tragbare Endgerät sich in oder an einem Kraftfahrzeug befindet und das Kraftfahrzeug sich bewegt. Der Bewegungszustand nicht-fahrend bedeutet, dass
- das tragbare Endgerät sich in oder an einem Kraftfahrzeug befindet, wobei das Kraftfahrzeug keine Bewegung ausführt (also stillsteht) oder
- das tragbare Endgerät sich nicht in oder an einem Kraftfahrzeug befindet.

Der Bewegungszustand und/oder eine Änderung des Bewegungszustands können mit einem Sensor erfasst werden. Der Sensor kann mit dem Endgerät datentechnisch gekoppelt sein. Es kann vorgesehen sein, dass der Sensor in das tragbare Endgerät integriert ist. Der Sensor kann ausgewählt aus der folgenden Gruppe von Sensoren sein: GNSS-Empfänger (GNSS - global navigation satellite system, globales Navigationssatellitensystem), Beschleunigungssensor, Gyroskop, Magnetometer und eine beliebige Kombination der vorgenannten Sensoren. Der Beschleunigungssensor kann eine, zwei oder drei Achsen aufweisen. Das Gyroskop kann eingerichtet sein, eine Änderung der Winkelgeschwindigkeit um eine Achse, um zwei Achsen oder um drei Achsen zu erfassen. Das tragbare Endgerät kann einen oder eine beliebige Kombination der vorgenannten Sensoren aufweisen. In handelsüblichen Smartphones und Tablets sind üblicherweise alle der vorgenannten Sensoren verbaut.

Es kann vorgesehen sein, dass der Bewegungszustand des tragbaren Endgeräts fortlaufend überwacht wird. Das tragbare Endgerät kann eingerichtet sein, den Bewegungszustand in regelmäßigen Zeitabständen zu erfassen, beispielsweise alle 10 ms, alle 100 ms, jede Sekunde oder alle 2 s. Somit können der Bewegungszustand und/oder eine Änderung des Bewegungszustands zeitnah erfasst werden.

Der Bewegungszustand des tragbaren Endgeräts kann beispielsweise mittels Activity Recognition von Google erkannt werden. Activity Recognition basiert auf den Sensoren des tragbaren Endgeräts. Activity Recognition erkennt Aktivitäten automatisch, indem es in regelmäßigen Abständen umfangreiche Sensordaten ausliest und sie beispielsweise mithilfe von Modellen für maschinelles Lernen verarbeitet. Zur Optimierung von Ressourcen kann Activity Recognition die Aktivitätsberichte beenden, wenn das Endgerät eine Weile inaktiv ist. Wenn Activity Recognition eine Bewegung erkennt, wird die Berichterstellung mit niedrigem Energieverbrauch fortgesetzt.

Alternativ kann der Bewegungszustand des tragbaren Endgeräts mittels des CMMotionManager von Apple erkannt werden. Der CMMotionManager wertet die Resultate eines oder mehrerer Sensoren aus, um den Bewegungszustand zu ermitteln.

Wenn Activity Recognition von Google oder CMMotionManager von Apple verwendet werden, kann der Bewegungszustand einen der folgenden Bewegungszustände einnehmen:
- im Fahrzeug (Google: IN_VEHICLE, Apple: automotive),
- zu Fuß (Google: ON_FOOT, bei Apple nicht vorhanden),
- laufend (Google: RUNNING, Apple: running),
- gehend (Google: WALKING, Apple: walking),
- auf einem Fahrrad (Google: ON_BICYCLE, Apple: cycling) und
- stehend (Google: STILL, Apple: stationary).

In diesem Fall wird der Bewegungszustand "im Fahrzeug" als fahrend bezeichnet. Die anderen Bewegungszustände (zu Fuß, laufend, gehend, auf dem Fahrrad und stehend) werden zusammengefasst als nicht-fahrend bezeichnet. Es besteht die Möglichkeit, dass der Bewegungszustand des tragbaren Endgeräts nicht ermittelt werden kann; der Wert also unbekannt (Google: UNKNOWN, Apple: unknown) ist.

Sowohl Activity Recognition von Google als auch CMMotionManager von Apple sind hinlänglich bekannt und umfangreich dokumentiert, sodass in dieser Offenbarung nicht weiter hierauf eingegangen wird.

Es kann auch vorgesehen sein, dass zu einem Bewegungszustand ein Konfidenzwert bestimmt wird, wobei der Konfidenzwert angibt, mit welcher Wahrscheinlichkeit der ermittelte Bewegungszustand dem tatsächlichen Bewegungszustand entspricht. Der Konfidenzwert (KW) kann beispielsweise einen Wert zwischen 0 ≤ KW ≤ 100 annehmen. Ein hoher Konfidenzwert weist darauf hin, dass es wahrscheinlich ist, dass der erkannte Bewegungszustand korrekt ist. Ein Konfidenzwert von ≤ 50 weist daraufhin, dass es einen anderen Bewegungszustand geben kann, der genauso wahrscheinlich oder wahrscheinlicher ist. Mehrere Bewegungszustände können einen hohen Konfidenzwert haben. Zum Beispiel kann der Bewegungszustand "zu Fuß" (ON_FOOT) einen Konfidenzwert von 100 haben, während der Bewegungszustand "laufend" (RUNNING) einen Konfidenzwert von 95 haben kann. Die Summe der Konfidenzwerte aller erkannten Bewegungszustände muss nicht ≤ 100 sein, da sich einige Bewegungszustände nicht gegenseitig ausschließen (z. B. kann man gehen, während man in einem Bus sitzt) und einige Bewegungszustände hierarchisch sind (z. B. ist "zu Fuß" eine Verallgemeinerung von "gehend" und "laufend"). Sowohl Activity Recognition von Google als auch CMMotionManager von Apple ermöglichen die Bestimmung eines Konfidenzwerts für den ermittelten Bewegungszustand.

Das tragbare Endgerät ist eingerichtet, eine Mauterhebungsanwendung (in der vorliegenden Offenbarung auch kurz als Maut-App bezeichnet) auszuführen. Die Maut-App kann als Hintergrundanwendung ausgeführt werden.

Der Mauterhebungszustand ist aktiv, wenn die Maut-App ausgeführt wird und der Nutzer in der Maut-App mittels einer Nutzereingabe den Beginn einer Fahrt signalisiert hat. In diesem Fall wird davon ausgegangen, dass der Nutzer sich in einem Kraftfahrzeug befindet und eine Fahrt beginnt. Nach dem Fahrtbeginn kann die Maut-App auch als Hintergrundanwendung ausgeführt werden.

Der Mauterhebungszustand ist inaktiv, wenn der Nutzer eine Fahrt nicht gestartet hat, also beispielsweise auch, wenn der Nutzer eine zuvor begonnene Fahrt mittels einer Nutzereingabe beendet hat. Ohne den Start einer Fahrt durch einen Nutzer wird davon ausgegangen, dass keine Fahrt mit einem Kraftfahrzeug stattfindet. Bei einer Beendigung einer Fahrt durch den Nutzer wird davon ausgegangen, dass die Fahrt beendet ist. Die Maut-App kann auch bei nicht gestarteter Fahrt oder nach der Beendigung einer Fahrt ausgeführt werden, beispielsweise als Hintergrundanwendung.

Bei aktivem Mauterhebungszustand (also ausgeführter Maut-App und Eingabe eines Fahrtbeginns) ist das tragbare Endgerät eingerichtet:
- während der Fahrt des Kraftfahrzeugs zu bestimmten Zeiten eine Positionsinformation zu bestimmen, wobei die Positionsinformation eine Position des tragbaren Endgeräts (und damit des Kraftfahrzeugs) umfasst, und
- die bestimmten Positionsinformationen in dem Speicher des tragbaren Endgeräts abzulegen.

Es kann vorgesehen sein, dass die Positionsinformationen in regelmäßigen Zeitabständen bestimmt werden. Beispielsweise kann vorgesehen sein, die Position des tragbaren Endgeräts jede Sekunde, alle 2 Sekunden oder alle 5 Sekunden zu bestimmen. Hiermit soll sichergestellt sein, dass die Fahrt des Kraftfahrzeugs möglichst exakt (idealerweise nahezu lückenlos) nachvollzogen werden kann, sodass die Mautgebühr genau bestimmt werden kann.

Es kann vorgesehen sein, dass das tragbare Endgerät weiter eingerichtet ist, zumindest einen Teil der gespeicherten Positionsinformationen bei Eintreten einer vorbestimmten Bedingung an die Zentrale zu übermitteln. Vorzugsweise werden alle im Speicher vorhandenen Positionsinformationen bei Eintreten der vorbestimmten Bedingung an die Zentrale übermittelt.

Die vorbestimmte Bedingung zum Übermitteln der im Speicher des tragbaren Endgeräts abgelegten Positionsinformationen an die Zentrale kann wenigstens eine der folgenden Bedingungen sein:
- ein vorbestimmtes Zeitintervall ist abgelaufen,
- ein Ende der Fahrt wird bestimmt,
- eine vorbestimmte Speicherkapazität in dem tragbaren Endgerät wird erreicht und
- das Endgerät wird ausgeschaltet (der Versand der Positionsinformationen erfolgt dann vor dem Herunterfahren des Endgeräts).

Das vorbestimmte Zeitintervall kann einen beliebigen Wert zwischen 1 Minute und 60 Minuten annehmen, beispielsweise 2 Minuten, 5 Minuten, 10 Minuten, 20 Minuten oder 30 Minuten. Es kann auch eine beliebige Kombination der vorgenannten Bedingungen vorgesehen sein. In einer bevorzugten Ausführungsform werden die Positionsinformationen alle X Minuten (z. B. X = 5, 10, 15, 20, 25 oder 30) an die Zentrale übermittelt und sobald ein Ende der Fahrt festgestellt wird, werden die noch im Speicher des Endgeräts vorhandenen Positionsinformationen an die Zentrale übermittelt.

Die Zentrale kann eingerichtet sein, die von dem tragbaren Endgerät empfangenen Positionsinformationen auszuwerten, also beispielsweise die Positionen des tragbaren Endgeräts mit einem Modell von mautpflichtigen Strecken abzugleichen, und hieraus eine Mautgebühr zu bestimmen. Die Zentrale kann weiter eingerichtet sein, die bestimmte Mautgebühr an das tragbare Endgerät zu übermitteln. Das Endgerät kann eingerichtet sein, die Mautgebühr auszugeben, beispielweise auf einer Anzeigeeinrichtung darzustellen.

Alternativ kann vorgesehen sein, dass das Endgerät eingerichtet ist, nach Abschluss der Fahrt die gespeicherten Positionsinformationen auszuwerten und hieraus eine Mautgebühr zu bestimmen. Das Endgerät kann eingerichtet sein, die Mautgebühr auszugeben, beispielweise auf einer Anzeigeeinrichtung darzustellen.

Das tragbare Endgerät kann eingerichtet sein, vor einem Fahrtbeginn mittels einer Nutzereingabe eine Fahrzeugkennzeichnung des dem tragbaren Endgerät zugeordneten Kraftfahrzeugs und/oder wenigstens eine Fahrzeugeigenschaft des dem tragbaren Endgerät zugeordneten Kraftfahrzeugs zu erfassen und die Fahrzeugkennzeichnung und/oder die wenigstens eine Fahrzeugeigenschaft an die Zentrale zu übermitteln. Die Nutzereingabe kann mittels einer Eingabeeinrichtung des Endgeräts erfolgen, beispielsweise mittels einer berührungsempfindlichen Anzeigeeinrichtung (Touchscreen).

Die Fahrzeugkennzeichnung kann das Kennzeichen des Kraftfahrzeugs sein. Die Fahrzeugkennzeichnung kann ein Herkunftsland des Fahrzeugs umfassen, beispielsweise als Angabe auf dem Kennzeichen. Die Fahrzeugkennzeichnung ermöglicht eine eindeutige Identifikation des Kraftfahrzeugs. Die Fahrzeugkennzeichnung kann verwendet werden, um eine Mitwirkung des Kraftfahrzeugs am Mautverfahren während der Fahrt zu kontrollieren.

Die wenigstens eine Fahrzeugeigenschaft kann ausgewählt aus den Elementen der folgenden Gruppe sein: zulässiges Gesamtgewicht, Achszahl, Schadstoffklasse, Antriebsart und eine Kombination der vorgenannten Elemente.

In vielen Ländern, unter anderem in Deutschland, hängt die Höhe der zu zahlenden Maut von Fahrzeugeigenschaften des Kraftfahrzeugs ab. Die Fahrzeugeigenschaften sind in diesen Ländem vor der Fahrt anzugeben, beispielsweise mittels einer Nutzereingabe am Endgerät. Es kann vorgesehen sein, dass bei einer Änderung der Angaben zu den Fahrzeugeigenschaften der Zeitpunkt der Änderung dokumentiert wird.

Wenn die Maut-App ausgeführt wird, bestimmt das tragbare Endgerät zu bestimmten Zeiten (vorzugsweise in regelmäßigen Zeitabständen) seine Position (und damit die Position des Kraftfahrzeugs). Zur Positionsbestimmung kann dem Endgerät eine Positionserfassungseinrichtung zugeordnet sein, beispielsweise in dem Endgerät verbaut sein oder mit dem Endgerät gekoppelt sein. Die Positionserfassungseinrichtung kann als GNSS-Empfänger ausgeführt sein. Geeignete GNSS-Systeme sind beispielsweise GPS, Glonass, Galileo oder Beidou. Bei Smartphones und Tablets ist ein GNSS-Empfänger üblicherweise in das Gerät integriert. Die Position des Endgeräts umfasst wenigstens einen Längengrad und einen Breitengrad. Ergänzend kann die Position eine Höhe über dem Meeresspiegel, eine Richtung, eine Geschwindigkeit, die Anzahl der GNSS-Satelliten, von denen Signale erfasst werden, und einen HDOP-Wert (HDOP - Horizontal Dilution of Precision, ein Konfidenzwert für die Horizontalgenauigkeit der GNSS-Ortung) umfassen. Die Positionsinformation kann zusätzlich zur Position einen Positionszeitstempel umfassen, wobei der Positionszeitstempel angibt, wann die Position bestimmt wurde.

Bei inaktivem Mauterhebungszustand bestimmt das tragbare Endgerät mit der Mauterhebungsanwendung keine Positionsinformationen. Eine Positionsbestimmung durch andere Anwendungen des Endgeräts ist gegebenenfalls möglich. Falls Positionsinformationen durch andere Anwendungen bestimmt werden, so werden diese bei inaktivem Mauterhebungszustand zumindest von der Mauterhebungsanwendung nicht gespeichert.

Das Erfassen des Bewegungszustands kann ein Feststellen einer Änderung des Bewegungszustands von einem ersten Bewegungszustand zu einem zweiten Bewegungszustand umfassen.

Der erste Bewegungszustand ist ungleich dem zweiten Bewegungszustand. Der zweite Bewegungszustand kann mit dem gemäß dem Mauterhebungszustand zu erwartenden Bewegungszustand verglichen werden. Das Signal wird ausgegeben, wenn der zweite Bewegungszustand nicht mit dem erwarteten Bewegungszustand übereinstimmt.

Es kann vorgesehen sein, dass ein Zeitstempel bestimmt und im tragbaren Endgerät gespeichert wird, wobei der Zeitstempel den Zeitpunkt der Änderung des Bewegungszustands von dem ersten Bewegungszustand zu dem zweiten Bewegungszustand angibt.

In einer Ausführungsform ist vorgesehen, dass, wenn
- der erste Bewegungszustand nicht-fahrend ist und der zweite Bewegungszustand fahrend ist und
- der Mauterhebungszustand zum Zeitpunkt der Änderung des Bewegungszustands inaktiv ist und somit der erwartete Bewegungszustand nicht-fahrend ist,
das Endgerät einen Hinweis an einen Nutzer ausgibt, die Mauterhebung zu aktivieren und bei Bestätigung durch den Nutzer in den aktiven Mauterhebungszustand wechselt. Der Nutzer erhält also einen Hinweis, wenn die Änderung des Bewegungszustands einen Wechsel von einem nicht-fahrenden Zustand zu einem fahrenden Zustand anzeigt, dass er in der Maut-App einen Fahrtbeginn eingeben soll. Mit dem Beginn der Fahrt in der Maut-App beginnt dann die Bestimmung der Positionsinformationen, die Speicherung der Positionsinformationen und die Übertragung der Positionsinformationen an die Zentrale wie bereits beschrieben.

Es kann weiter vorgesehen sein, das Endgerät bei Feststellen einer Änderung des Bewegungszustands von nicht-fahrend zu fahrend selbstständig zu bestimmten Zeiten (vorzugsweise in regelmäßigen Zeitabständen) Positionsinformationen bestimmt und die bestimmten Positionsinformationen in seinem Speicher ablegt. Das Endgerät wechselt bei Bestätigung durch den Nutzer rückwirkend zu dem von dem Zeitstempel vorgegebenen Zeitpunkt in den aktiven Mauterhebungszustand. Sobald erkannt wird, dass sich der Bewegungszustand zu fahrend ändert, werden die Positionsinformationen erfasst und gespeichert. Hiermit ist sichergestellt, dass mit Beginn der Fahrt des Kraftfahrzeugs alle Positionsinformationen vorhanden sind, sodass die Mautgebühr für die komplette Fahrt bestimmt werden kann. Falls der Nutzer den aktiven Mauterhebungszustand nicht bestätigen sollte, werden die seit der Änderung des Bewegungszustands erfassten und gespeicherten Positionsinformationen gelöscht und die Bestimmung der Positionsinformationen wird beendet. Dies kann beispielsweise der Fall sein, wenn der Bewegungszustand fahrend irrtümlich ermittelt wurde oder wenn der Nutzer eine Fahrt mit einem nicht mautpflichtigen Kraftfahrzeug durchführt.

Ergänzend oder alternativ kann vorgesehen sein, dass, wenn
- der erste Bewegungszustand fahrend ist und der zweite Bewegungszustand nicht-fahrend ist und
- der Mauterhebungszustand zum Zeitpunkt der Änderung des Bewegungszustands aktiv ist und somit der erwartete Bewegungszustand fahrend ist,
das Endgerät einen Hinweis an einen Nutzer ausgibt, die Mauterhebung zu deaktivieren und bei Bestätigung durch den Nutzer in den inaktiven Mauterhebungszustand wechselt. Hier zeigt die Änderung des Bewegungszustands einen Wechsel von einem fahrenden Zustand zu einem nicht-fahrenden Zustand an. In diesem Fall kann vorgesehen sein, dass das Endgerät bei Bestätigung durch den Nutzer alle nach dem von dem Zeitstempel vorgegebenen Zeitpunkt erfassten Positionsinformationen löscht und rückwirkend zu dem von dem Zeitstempel vorgegebenen Zeitpunkt in den inaktiven Mauterhebungszustand wechselt.

Es kann vorgesehen sein, dass eine Sensitivität für das Erfassen des Bewegungszustands und/oder für das Feststellen einer Änderung des Bewegungszustands unter Berücksichtigung von Zusatzinformationen angepasst wird, insbesondere verbessert wird. Die Genauigkeit des Feststellens einer Änderung des Bewegungszustands kann beispielsweise durch Zusatzinformationen erhöht werden, die in der Maut-App hinterlegt sind oder die sich aus dem Kontext der mautpflichtigen Fahrt ergeben.

Die Zusatzinformationen können aus der folgenden Gruppe von Zusatzinformationen ausgewählt werden: eine ortsbezogene Zusatzinformation, eine fahrzeugspezifische Zusatzinformation, eine fahrtdauerspezifische Zusatzinformation, eine kommunikationsspezifische Zusatzinformation und eine beliebige Kombination der vorgenannten Zusatzinformationen. Eine ortsbezogene Zusatzinformation kann beispielsweise die Information sein, dass das Kraftfahrzeug in einem Stau steht oder dass das Kraftfahrzeug seinen Zielort erreicht hat. Eine fahrzeugspezifische Zusatzinformation kann beispielsweise die Gewichtsklasse des Kraftfahrzeugs sein. Eine fahrtdauerspezifische Zusatzinformation kann beispielsweise die Dauer der Fahrt oder die zulässige Lenkzeit sein. Eine kommunikationsspezifische Zusatzinformation kann beispielsweise eine Änderung, insbesondere eine Verschlechterung, des Empfangs eines GNSS-Signals oder ein Anmelden des tragbaren Endgeräts in einem WLAN sein.

Ergänzend oder alternativ kann vorgesehen sein, dass beim Vergleichen des erfassten Bewegungszustands mit dem erwarteten Bewegungszustand externe Daten berücksichtigt werden, wobei die externen Daten von der zentralen Datenverarbeitungseinrichtung bereitgestellt werden. Es kann vorgesehen sein, dass nach dem Erfassen einer Änderung des Bewegungszustands von dem tragbaren Endgerät eine Nachricht an die Zentrale übermittelt wird. Die Nachricht kann insbesondere übermittelt werden, wenn eine Änderung vom Bewegungszustand fahrend zum Bewegungszustand nicht-fahrend erfasst wird, aber auch wenn eine Änderung des Bewegungszustands von nicht-fahrend zu fahrend erfasst wird. Die Nachricht kann unverzüglich nach Erfassen der Änderung des Bewegungszustands übermittelt werden. Es kann vorgesehen sein, dass die Nachricht einen Zeitstempel umfasst, wobei der Zeitstempel angibt, zu welcher Zeit die Änderung des Bewegungszustands erfasst wurde. Ergänzend kann vorgesehen sein, dass die Nachricht eine Positionsinformation umfasst, wobei die Positionsinformation angibt, an welchem Ort (z. B. in Form von GNSS-Koordinaten) die Bewegungsänderung erfasst wurde.

Wenn das System mehrere tragbare Endgeräte umfasst (in einem realistischen Anwendungsfall durchaus mehrere tausende Endgeräte), welche jeweils eingerichtet sind, Nachrichten zu ihrem veränderten Bewegungszustand an die Zentrale zu übermitteln, können hieraus Rückschlüsse auf den Verkehrsfluss gezogen und beispielsweise Staus detektiert werden. Wenn in der Zentrale mehrere Nachrichten in engem zeitlichen und/oder räumlichen Zusammenhang eingehen, kann daraus gefolgert werden, dass sich ein Stau gebildet hat.

Merkmale, die im Zusammenhang mit dem Verfahren offenbart sind, können in analoger Weise auf das Endgerät und auf das System angewendet werden und anders herum.

Die Begriffe "Fahrzeug" und "Kraftfahrzeug" werden synonym verwendet, soweit sich aus dem Kontext nicht explizit etwas Anderes ergibt.

### Beschreibung von Ausführungsbeispielen

Im Folgenden werden beispielhafte Ausführungsformen unter Bezugnahme auf Figuren näher erläutert. Es zeigen:
- Fig. 1: eine schematische Darstellung eines Systems zur Mauterhebung,
- Fig. 2: ein Ablaufdiagramm einer Ausführungsform eines Verfahrens zur Überwachung einer Mauterhebungsanwendung,
- Fig. 3: ein Ablaufdiagramm einer anderen Ausführungsform des Verfahrens zur Überwachung einer Mauterhebungsanwendung und
- Fig. 4: ein Ablaufdiagramm einer weiteren Ausführungsform des Verfahrens zur Überwachung einer Mauterhebungsanwendung.

Im Folgenden werden für gleiche Komponenten/Verfahrensschritte gleiche Bezugszeichen verwendet.

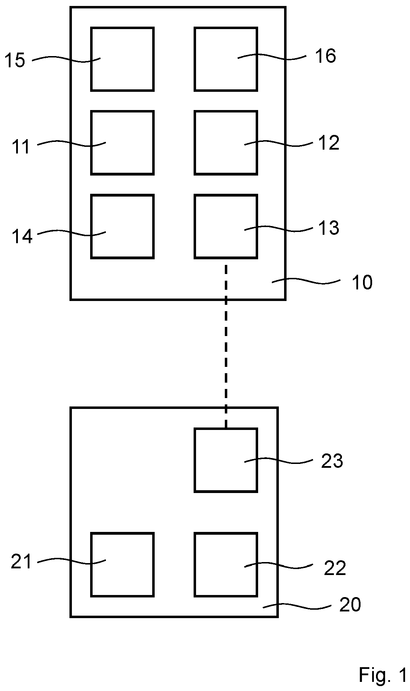

In Fig. 1 ist eine schematische Abbildung eines Systems zur Mauterhebung gezeigt. Das System umfasst ein tragbares Endgerät 10 und eine zentrale Datenverarbeitungseinrichtung (Zentrale) 20.

Das tragbare Endgerät 10 weist einen Prozessor 11, einen Speicher 12, eine Kommunikationseinheit 13, einen GNSS-Empfänger 14, einen Energiespeicher 15 und einen Anzeigeeinrichtung 16 auf. Das Endgerät 10 kann des Weiteren einen Lautsprecher aufweisen (nicht dargestellt). Die Anzeigeeinrichtung 16 kann in Form eines berührungsempfindlichen Bildschirms (Touchscreen) ausgeführt sein. Der Energiespeicher 15 ist eingerichtet, die Komponenten des tragbaren Endgeräts 10 mit elektrischer Energie zu versorgen. Der Energiespeicher 15 ist hier als wiederaufladbare Sekundärbatterie ausgeführt. Das tragbare Endgerät 10 kann als Smartphone oder als Tablet ausgebildet sein. Das Endgerät 10 ist während einer Fahrt einem Kraftfahrzeug zugeordnet, welches während der Fahrt zumindest zeitweise auf einer oder mehreren mautpflichtigen Strecken unterwegs sein kann. Das Endgerät 10 kann beispielsweise lösbar in einem Halter in dem Kraftfahrzeug angeordnet sein. Das Endgerät 10 kann zusätzlich zu dem GNSS-Empfänger 14 weitere Sensoren aufweisen, welche in Fig. 1 nicht dargestellt sind, beispielsweise einen Beschleunigungssensor (zum Erfassen einer linearen Beschleunigung entlang einer Achse, entlang zwei Achsen oder entlang drei Achsen), ein Gyroskop (zum Erfassen einer Änderung der Winkelgeschwindigkeit um eine Achse, um zwei Achsen oder um drei Achsen) und/oder ein Magnetometer.

Die Zentrale 20 weist einen Prozessor 21, einen Speicher 22 und eine Kommunikationseinheit 23 auf.

Das Endgerät 10 und die Zentrale 20 sind eingerichtet, mittels ihrer Kommunikationseinheiten 13, 23 zumindest zeitweise bidirektional miteinander Signale und/oder Daten auszutauschen, beispielsweise mittels Mobilfunk und/oder mittels WLAN. Die Kommunikationswege sind in Fig. 1 mit einer gestrichelten Linie dargestellt.

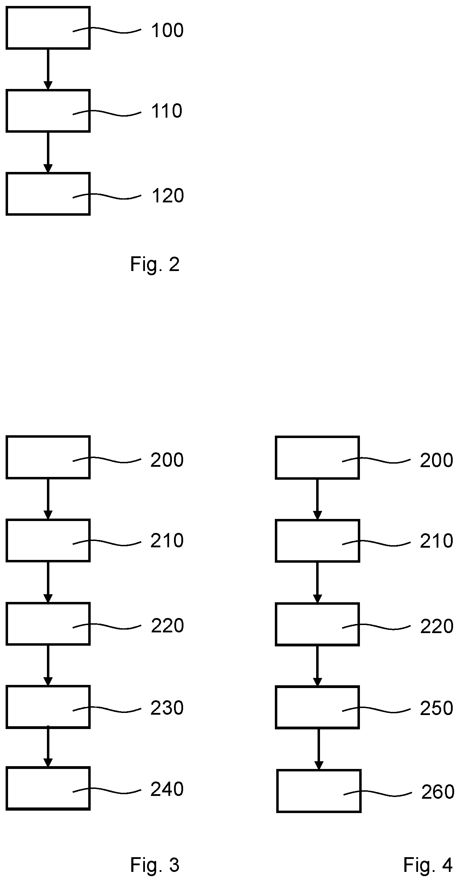

Das tragbare Endgerät 10 ist eingerichtet, mittels seines Prozessors 11 ein Verfahren zur Überwachung einer von tragbaren Endgerät 10 mittels des Prozessors 11 ausgeführten Mauterhebungsanwendung (Maut-App) auszuführen. Ein Ablaufdiagramm einer Ausführungsform des Verfahrens ist in Fig. 2 dargestellt. Es wird ein Bewegungszustand des tragbaren Endgeräts 10 erfasst (Schritt 100). Der in Schritt 100 erfasste Bewegungszustand wird mit einem Bewegungszustand verglichen, der gemäß einem Mauterhebungszustand zu erwarten ist (Schritt 110). Es wird ein Signal ausgegeben, wenn der erfasste Bewegungszustand nicht mit dem erwarteten Bewegungszustand übereinstimmt (Schritt 120). Das Verfahren und/oder die Maut-App können in dem Speicher 12 des Endgeräts 10 gespeichert sein.

Der Mauterhebungszustand kann einen von zwei möglichen Zuständen einnehmen, nämlich aktiv oder inaktiv. Bei aktivem Mauterhebungszustand ist der erwartete Bewegungszustand fahrend. Bei inaktivem Mauterhebungszustand ist der erwartete Bewegungszustand nicht-fahrend.

Der Mauterhebungszustand ist aktiv, wenn
a) die Maut-App ausgeführt wird und
b) ein Nutzer den Beginn einer Fahrt signalisiert, beispielsweise mittels einer Nutzereingabe.

Wenn der Mauterhebungszustand aktiv ist, bestimmt das tragbare Endgerät zu bestimmten Zeiten seine Position und speichert die Position im Speicher 12.

Der Mauterhebungszustand ist inaktiv, wenn
a) die Maut-App ausgeführt wird, der Nutzer jedoch nicht einen Fahrtbeginn signalisiert hat, oder
b) bei ausgeführter Maut-App eine zuvor begonnene Fahrt vom Nutzer beendet wird, beispielsweise mittels einer Nutzereingabe.

Bei inaktivem Mauterhebungszustand bestimmt das Endgerät 10 zumindest mit der Maut-App seine Position nicht. Andere Anwendungen, die gegebenenfalls vom Endgerät 10 ausgeführt werden, können durchaus die Position bestimmen. Die Positionsbestimmung durch andere Anwendungen wird jedoch von der Maut-App weder gespeichert noch anderweitig ausgewertet.

In einer Ausführungsform werden bei Eintreten einer vorbestimmten Bedingung zumindest einige (vorzugsweise alle) im Speicher 12 abgelegten Positionen mittels der Kommunikationseinheit 13 an die Zentrale 20 übermittelt. Die vorbestimmte Bedingung kann sein, dass der Nutzer mittels einer Nutzereingabe ein Ende der Fahrt signalisiert, oder dass die im Speicher 12 abgelegten Positionen eine bestimmte Kapazität erreichen. Die Zentrale 20 ist eingerichtet, anhand der übermittelten Positionen zu bestimmen, ob während der Fahrt eine oder mehrere mautpflichtige Strecken genutzt wurden und gegebenenfalls die fällige Mautgebühr zu berechnen. Optional kann vorgesehen sein, dass die Zentrale 20 die berechnete Mautgebühr an das tragbare Endgerät 10 übermittelt und das Endgerät 10 die Mautgebühr ausgibt, beispielsweise mittels der Anzeigeeinrichtung 16 darstellt.

In einer anderen Ausführungsform ist das Endgerät 10 eingerichtet, nach Abschluss der Fahrt anhand der gespeicherten Positionsinformationen zu bestimmen, ob während der Fahrt eine oder mehrere mautpflichtige Strecken genutzt wurden, gegebenenfalls die fällige Mautgebühr zu berechnen und optional die Mautgebühr auszugeben, beispielsweise mittels der Anzeigeeinrichtung 16 darzustellen.

Die Positionsbestimmung des Endgeräts 10 kann mit verschiedenen Verfahren durchgeführt werden. Bei der in Fig. 1 gezeigten Ausführungsform weist das Endgerät 10 einen GNSS-Empfänger 14 auf. Mittels des GNSS-Empfängers 14 kann die Position des Endgeräts 10 in bekannter Weise bestimmt werden, vorzugsweise in regelmäßigen Zeitabständen von beispielsweise 1 Sekunde. Wenn das Endgerät 10 als Smartphone ausgeführt ist, kann die Positionsbestimmung alternativ oder ergänzend mittels Mobilfunkzellenortung (GSM-Ortung) erfolgen. Verschiedene Varianten der Positionsbestimmung eines Endgeräts mittels Mobilfunkzellenortung, beispielsweise anhand der Laufzeiten der Signale des Endgeräts zu bestimmten Stellen im Mobilfunknetz, sind dem Fachmann hinlänglich bekannt und werden hier nicht näher beschrieben. Eine weitere Methode zur Positionsbestimmung, insbesondere im Rahmen eines Mautsystems, ist eine infrastrukturgestützte Positionsbestimmung. Entlang einer mautpflichtigen Strecke können Infrastruktureinrichtungen (sogenannte Baken) angeordnet sein. Wenn das Endgerät in die Nähe einer Infrastruktureinrichtung kommt, können Informationen zwischen der Infrastruktureinrichtung und dem Endgerät ausgetauscht werden. Beispielsweise kann die Infrastruktureinrichtung ihre bekannte Position an das Endgerät übermitteln. Anhand der Positionen der Infrastruktureinrichtungen kann der vom Endgerät und dem Kraftfahrzeug zurückgelegte Weg nachvollzogen und die Maut bestimmt werden. Eine Kommunikation zwischen der Infrastruktureinrichtung und dem Endgerät kann beispielsweise mittels der PC5-Schnittstelle des 5G-Mobilfunkstandards erfolgen.

Gemäß einer anderen Ausführungsform, deren Ablaufdiagramm in Fig. 3 dargestellt ist, wird eine Änderung eines Bewegungszustands von einem ersten Bewegungszustand zu einem zweiten (vom ersten Bewegungszustand verschiedenen) Bewegungszustand erfasst (Schritt 200). Der Zeitpunkt der Änderung des Bewegungszustands wird mit einem Zeitstempel dokumentiert, welcher im Speicher 12 des Endgeräts 10 abgelegt wird. Der zweite Bewegungszustand wird mit dem gemäß dem Mauterhebungszustand zu erwartenden Bewegungszustand verglichen (Schritt 210). Es wird ein Signal ausgegeben (beispielsweise als Darstellung auf der Anzeigeeinrichtung 16), wenn der zweite Bewegungszustand nicht mit dem erwarteten Bewegungszustand übereinstimmt (Schritt 220). Wenn der erste Bewegungszustand nicht-fahrend ist und der zweite Bewegungszustand fahrend ist und wenn der Mauterhebungszustand zum Zeitpunkt der Änderung des Bewegungszustands inaktiv ist, also der erwartete Bewegungszustand nicht-fahrend ist, gibt das Endgerät 10 einen Hinweis an den Nutzer aus (Schritt 230, beispielsweise als Darstellung auf der Anzeigeeinrichtung 16), die Mauterhebung zu aktivieren und wechselt bei Bestätigung durch den Nutzer in den aktiven Mauterhebungszustand (Schritt 240). Ergänzend kann bei dieser Ausführungsform vorgesehen sein, dass das Endgerät 10 bei Feststellen einer Änderung des Bewegungszustands von nicht-fahrend zu fahrend zu bestimmten Zeiten (z. B. regelmäßig jede Sekunde) seine Position bestimmt und die bestimmten Positionen in dem Speicher 12 ablegt, und dass das Endgerät 10 bei Bestätigung durch den Nutzer rückwirkend zu dem von dem Zeitstempel vorgegebenen Zeitpunkt in den aktiven Mauterhebungszustand wechselt.

Das Ablaufdiagramm einer weiteren Ausführungsform ist in Fig. 4 dargestellt. Es wird eine Änderung eines Bewegungszustands von einem ersten Bewegungszustand zu einem zweiten (vom ersten Bewegungszustand verschiedenen) Bewegungszustand erfasst (Schritt 200). Der Zeitpunkt der Änderung des Bewegungszustands wird mit einem Zeitstempel dokumentiert, welcher im Speicher 12 des Endgeräts 10 abgelegt wird. Der zweite Bewegungszustand wird mit dem gemäß dem Mauterhebungszustand zu erwartenden Bewegungszustand verglichen (Schritt 210). Es wird ein Signal ausgegeben (beispielsweise als Darstellung auf der Anzeigeeinrichtung 16), wenn der zweite Bewegungszustand nicht mit dem erwarteten Bewegungszustand übereinstimmt (Schritt 220). Wenn der erste Bewegungszustand fahrend ist und der zweite Bewegungszustand nicht-fahrend ist und wenn der Mauterhebungszustand zum Zeitpunkt der Änderung des Bewegungszustands aktiv ist, also der erwartete Bewegungszustand fahrend ist, gibt das Endgerät 10 einen Hinweis an den Nutzer aus (Schritt 250, beispielsweise als Darstellung auf der Anzeigeeinrichtung 16), die Mauterhebung zu deaktivieren und wechselt bei Bestätigung durch den Nutzer in den inaktiven Mauterhebungszustand (Schritt 260). Ergänzend kann vorgesehen sein, dass das Endgerät 10 bei Bestätigung durch den Nutzer alle nach dem von dem Zeitstempel vorgegebenen Zeitpunkt erfassten Positionsinformationen löscht und rückwirkend zu dem von dem Zeitstempel vorgegebenen Zeitpunkt in den inaktiven Mauterhebungszustand wechselt.

Die Abläufe der in Fig. 3 und Fig. 4 dargestellten Ausführungsformen können in der Maut-App kombiniert werden. Je nach Art der Änderung des Bewegungszustands (von fahrend zu nicht-fahrend oder von nicht-fahrend zu fahrend) können die jeweiligen Schritte ausgeführt werden.

Während die Maut-App ausgeführt wird, erfasst sie den Bewegungszustand des Endgeräts und registriert Änderungen des Bewegungszustands. Sobald der Nutzer die Mauterfassung startet, wird der aktuell erkannte Bewegungszustand mit einem erwartenden Bewegungszustand abgeglichen. Bei relevanten Änderungen der Bewegung während der Mauterfassung (z.B. einer Änderung von Bewegungsart "Fahrend" zu "Laufend"), wird dem Nutzer ein Hinweis auf dem Endgerät signalisiert. Der Nutzer hat nun die Möglichkeit, die Mauterfassung zu beenden oder nachträglich zu dem Zeitpunkt zu beenden, zu welchen die Änderung des Bewegungszustands registriert wurde. Gleiches gilt für relevante Änderungen des Bewegungszustands vor Beginn der Mauterfassung (z.B. von "Laufend" zu "Fahrend"). Hier wird dem Nutzer ein Hinweis signalisiert und er hat die Möglichkeit, die Mauterfassung zu starten oder nachträglich zum Zeitpunkt der erkannten Änderung des Bewegungszustands zu starten.

Bei allen hier offenbarten Ausführungsformen kann die Treffsicherheit zum Erfassen eines Bewegungszustands und/oder zum Erkennen einer Änderung des Bewegungszustands erhöht werden, indem (teilweise nur) im Mautsystem und/oder in der Maut-App hinterlegte Zusatzinformationen genutzt werden, bzw. der spezifische Nutzungskontext einbezogen wird. Folgende Zusatzinformationen können einzeln oder in beliebiger Kombination miteinander verwendet werden, um die Auswertung des Bewegungszustands zu verbessern.

Ortsbezogene Zusatzinformationen: Mit einer fortwährenden und zeitnahen Auswertung von Positionsinformationen von mehreren Endgeräten in der Zentrale 20 erfolgt eine Stauerkennung anhand anonymisierter Positionsinformationen der jüngsten Vergangenheit anderer Nutzer für die gleiche oder eine ähnliche Fahrstrecke. Hierbei werden Positionsdaten und die jeweilige Bewegungsrichtung ausgewertet. Mit der Zunahme der Wahrscheinlichkeit, dass der Nutzer mit seinem Endgerät aktuell im Stau steht, wird die Sensitivität für "Nicht-Fahren-Aktivitäten" verringert. Ergänzend oder alternativ erhält der Nutzer die Möglichkeit, einen Zielort anzugeben (optional mit Favoritenfunktion). Erkennt die Maut-App, dass der angegebene Zielort erreicht ist, erhöht sie die Sensitivität für "Nicht-Fahren-Aktivitäten".

Fahrzeugspezifische Zusatzinformationen: Je nach deklarierter Gewichtsklasse des Kraftfahrzeugs wird die Sensitivität für das Erfassen des Bewegungszustands bzw. das Erkennen einer Änderung des Bewegungszustands angepasst. Beispielsweise werden für schwere Fahrzeuge (z. B. mit einer Masse größer als 18 t) andere Parameter verwendet als für leichte Fahrzeuge (z. B. mit einer Masse kleiner als 12 t oder kleiner als 7,5 t). Hierzu werden Rohdaten aus Sensoren verwendet wie z.B. einem Gyroskop-Sensor, um z. B. ein Maß für Vibrationen der Fahrzeuge zu erhalten. Es kann angenommen werden, dass Vibrationen in schweren Fahrzeugen geringer sind als in leichten Fahrzeugen. Bei Änderungen (Verringerungen) der Vibrationen erhöht sich die Wahrscheinlichkeit, dass eine (mautpflichtige) Fahrt gerade beendet wurde, der Nutzer z.B. gerade den Motor abgestellt hat.

Fahrtdauerspezifische Zusatzinformationen: Bei einer Fahrtzeit, welche an die zulässige Lenkzeit herankommt oder diese überschreitet, wird die Sensitivität für "Nicht-Fahren-Aktivitäten" erhöht. Die zulässige Lenkzeit ist durch verschiedene Vorgaben bestimmt, wie z.B. Arbeitszeitgesetz, Fahrpersonalgesetz oder Fahrpersonalverordnung. Die tatsächliche Lenkzeit wird in der Regel durch Fahrtenschreiber (z. B. Tachographen) erfasst. Im Kontext der Endgeräte-basierten Mauterhebung kann jedoch (einfacher) stattdessen eine Einbuchungsdauer in die Mauterfassung als relevante Größe verwendet werden. Bei einer detektierten Fahrtunterbrechung merkt sich das System diese, um eine zukünftige Lenkzeitunterbrechung (neu) zu prognostizieren.

Kommunikationsspezifische Zusatzinformationen: Sofern sich die GNSS-Empfangsqualität des Endgeräts wesentlich verringert, wird die Sensitivität für "Nicht-Fahren-Aktivitäten" erhöht (Szenario "Ankunft in einem Gebäude"). Sofern ein Wechsel von Mobilfunk zu WLAN-Verbindung erfolgt, wird die Sensitivität für "Nicht-Fahren-Aktivitäten" erhöht (Szenario "Ankunft in einem Gebäude mit bekanntem/eingerichteten WLAN").

Für das Erfassen eines Bewegungszustands und/oder das Erkennen einer Änderung eines Bewegungszustands können die von Google (Activity Recognition API) und Apple (CMMotionManager) bereitgestellten Verfahren verwendet werden, im Folgenden als API abgekürzt. Hiermit wird ein Bewegungszustand erkannt und es kann eine Liste von möglichen Aktivitäten abgefragt werden - jeweils mit einer Konfidenz, dass dies der Nutzung durch den Anwender gerade entspricht. Typisch für eine Nutzung des Endgeräts während der Fahrt wären folgende Konfidenzwerte: für IN_VEHICLE 80, für ON_BICYLE 15, für ON_FOOT 10 und für STILL 5. Hält während der Fahrt das Fahrzeug z.B. an einer Ampel oder im Stau an, können Konfidenzwerte wie für IN_VEHICLE 40, für ON_BICYLE 25, für ON_FOOT 40 und für STILL 60 vorkommen.

Für die hier betrachtete Anwendung können bestimmte Bewegungszustände gruppiert werden, respektive kann die Betrachtung vereinfacht werden, auf das Ziel zu bestimmen, ob das Endgerät in einem Fahrzeug genutzt wird oder aber eine solche Benutzung durch andere Aktivitäten beendet wurde, der Nutzer also aus dem Fahrzeug ausgestiegen ist und zu Fuß unterwegs ist, oder sich z.B. im Fahrzeug schlafen legte. In diesem Sinne können die Einzelwahrscheinlichkeiten der Aktivitäten in der Momentaufnahme wie auch im Zeitverlauf mit einer Funktion transformiert werden, z. B.:
- IN VEHICLE p1
- ON BICYLE p2
- ON_FOOT p3
- WALKING p4
- RUNNING p5
- TILTING p6
- STILL p7
- UNKNOWN p7

Die Wahrscheinlichkeit für eine Fahrt ist dann eine Funktion der oben aufgeführten Parameter: p(Fahrt) = f(p1, p2, ..., p7)

Die Funktion kann bevor oder nachdem sie genutzt wurde durch Parameteränderungen gezielt beeinflusst werden. Beispielsweise können Eingangswerte der API gezielt verändert werden, wenn aus anderen Informationsquellen Hinweise vorliegen, die die Wahrscheinlichkeit beeinflussen. Würde z.B. die API Werte mit z.B. IN VEHICLE 50, ON_BICYLE 15, ON_FOOT 10 und STILL 60 ausgeben, aus der Mautsystemzentrale jedoch die Information vorliegen, dass auf der befahrenen Strecke mit sehr hoher Wahrscheinlichkeit gerade Stau ist, dann können
- vor Nutzung der Funktion die API-Werte angepasst werden in IN_VEHICLE 65, ON_BICYLE 15, ON_FOOT 25 und STILL 60 umso zu verhindern, dass der Sprung von mautpflichtige Fahrt auf keine mautpflichtige Fahrt erfolgt, oder
- aber es könnte der Stauwahrscheinlichkeitswert s (aus der Zentrale) ein separater Parameter der Funktion sein: p(Fahrt) = f(p1, p2, ..., p7, s)

Es wird darauf hingewiesen, dass "umfassend" und "aufweisend" keine anderen Elemente oder Schritte ausschließt und dass die Verwendung von "eine" oder "ein" keine Vielzahl ausschließt. Bezugszeichen in den Ansprüchen sind nicht als Einschränkungen anzusehen.

Die in der Beschreibung, den Ansprüchen und den Figuren offenbarten Merkmale können für die Verwirklichung von Ausführungsformen sowohl einzeln als auch in beliebiger Kombination miteinander relevant sein.

## Patentansprüche

1. Computerimplementiertes Verfahren zur Überwachung einer von einem tragbaren Endgerät ausgeführten Mauterhebungsanwendung, wobei das Verfahren folgende Schritte umfasst:
- Erfassen eines Bewegungszustands des tragbaren Endgeräts,
- Vergleichen des erfassten Bewegungszustands mit einem Bewegungszustand, der gemäß einem Mauterhebungszustand zu erwarten ist, wobei der Mauterhebungszustand einen von zwei möglichen Zuständen einnimmt, nämlich aktiv oder inaktiv, wobei bei aktivem Mauterhebungszustand der erwartete Bewegungszustand fahrend ist, und wobei bei inaktivem Mauterhebungszustand der erwartete Bewegungszustand nicht-fahrend ist, und
- Ausgeben eines Signals mittels des tragbaren Endgeräts, wenn der erfasste Bewegungszustand nicht mit dem erwarteten Bewegungszustand übereinstimmt.

2. Verfahren nach Anspruch 1, wobei bei aktivem Mauterhebungszustand das tragbare Endgerät eingerichtet ist:
- zu bestimmten Zeiten eine Positionsinformation zu bestimmen, wobei die Positionsinformation eine Position des Endgeräts umfasst, und
- die bestimmten Positionsinformationen in einem Speicher des Endgeräts abzulegen.

3. Verfahren nach Anspruch 1 oder 2, wobei bei inaktivem Mauterhebungszustand das tragbare Endgerät mit der Mauterhebungsanwendung keine Positionsinformationen bestimmt.

4. Verfahren nach einem der vorangehenden Ansprüche, wobei das Erfassen des Bewegungszustands ein Feststellen einer Änderung des Bewegungszustands von einem ersten Bewegungszustand zu einem zweiten Bewegungszustand umfasst, wobei der zweite Bewegungszustand mit dem gemäß dem Mauterhebungszustand zu erwartenden Bewegungszustand verglichen wird und wobei das Signal ausgegeben wird, wenn der zweite Bewegungszustand nicht mit dem erwarteten Bewegungszustand übereinstimmt.

5. Verfahren nach Anspruch 4, wobei ein Zeitstempel bestimmt wird und im tragbaren Endgerät gespeichert wird, wobei der Zeitstempel den Zeitpunkt der Änderung des Bewegungszustands von dem ersten Bewegungszustand zu dem zweiten Bewegungszustand angibt.

6. Verfahren nach Anspruch 4 oder 5, wobei, wenn
- der erste Bewegungszustand nicht-fahrend ist und der zweite Bewegungszustand fahrend ist und
- der Mauterhebungszustand zum Zeitpunkt der Änderung des Bewegungszustands inaktiv ist und somit der erwartete Bewegungszustand nicht-fahrend ist,
das Endgerät einen Hinweis an einen Nutzer ausgibt, die Mauterhebung zu aktivieren und bei Bestätigung durch den Nutzer in den aktiven Mauterhebungszustand wechselt.

7. Verfahren nach Anspruch 5 und 6, wobei das Endgerät bei Feststellen einer Änderung des Bewegungszustands von nicht-fahrend zu fahrend zu bestimmten Zeiten Positionsinformationen bestimmt und die bestimmten Positionsinformationen in einem Speicher ablegt, und wobei das Endgerät bei Bestätigung durch den Nutzer rückwirkend zu dem von dem Zeitstempel vorgegebenen Zeitpunkt in den aktiven Mauterhebungszustand wechselt.

8. Verfahren nach Anspruch 4 oder 5, wobei, wenn
- der erste Bewegungszustand fahrend ist und der zweite Bewegungszustand nicht-fahrend ist und
- der Mauterhebungszustand zum Zeitpunkt der Änderung des Bewegungszustands aktiv ist und somit der erwartete Bewegungszustand fahrend ist,
das Endgerät einen Hinweis an einen Nutzer ausgibt, die Mauterhebung zu deaktivieren und bei Bestätigung durch den Nutzer in den inaktiven Mauterhebungszustand wechselt.

9. Verfahren nach Anspruch 5 und 8, wobei das Endgerät bei Bestätigung durch den Nutzer alle nach dem von dem Zeitstempel vorgegebenen Zeitpunkt erfassten Positionsinformationen im Speicher löscht und rückwirkend zu dem von dem Zeitstempel vorgegebenen Zeitpunkt in den inaktiven Mauterhebungszustand wechselt.

10. Verfahren nach einem der vorangehenden Ansprüche, wobei eine Sensitivität für das Erfassen des Bewegungszustands und/oder für das Feststellen einer Änderung des Bewegungszustands unter Berücksichtigung von Zusatzinformationen angepasst wird.

11. Verfahren nach Anspruch 10, wobei die Zusatzinformationen aus der folgenden Gruppe von Zusatzinformationen ausgewählt werden: eine ortsbezogene Zusatzinformation, eine fahrzeugspezifische Zusatzinformation, eine fahrtdauerspezifische Zusatzinformation, eine kommunikationsspezifische Zusatzinformation und eine beliebige Kombination der vorgenannten Zusatzinformationen.

12. Verfahren nach einem der vorangehenden Ansprüche, wobei der Bewegungszustand und/oder das Feststellen einer Änderung des Bewegungszustands mit einem Sensor ausgewählt aus der folgenden Gruppe von Sensoren erfasst werden: GNSS-Empfänger, Beschleunigungssensor, Gyroskop, Magnetometer und eine beliebige Kombination der vorgenannten Sensoren.

13. Tragbares Endgerät, das eingerichtet ist,
- einen Bewegungszustand des tragbaren Endgeräts zu erfassen,
- den erfassten Bewegungszustand mit einem Bewegungszustand, der gemäß einem Mauterhebungszustand zu erwarten ist, zu vergleichen, wobei der Mauterhebungszustand einen von zwei möglichen Zuständen einnimmt, nämlich aktiv oder inaktiv, wobei bei aktivem Mauterhebungszustand der erwartete Bewegungszustand fahrend ist, und wobei bei inaktivem Mauterhebungszustand der erwartete Bewegungszustand nicht-fahrend ist, und
- ein Signal auszugeben, wenn der erfasste Bewegungszustand nicht mit dem erwarteten Bewegungszustand übereinstimmt.

14. System aufweisend
- ein tragbares Endgerät nach Anspruch 13, und
- eine zentrale Datenverarbeitungseinrichtung,
wobei zwischen der zentralen Datenverarbeitungseinrichtung und dem tragbaren Endgerät zumindest zeitweise eine Kommunikationsverbindung besteht.
